# EUROPEAN PATENT APPLICATION

(11) **EP 3 961 572 A1**
(43) Date of publication of application: **02.03.2022**
(21) Application number: 21192108.5
(22) Date of filing: 19.08.2021
(51) Int. Cl.: G06T 15/00

(54) **IMAGE RENDERING SYSTEM AND METHOD**

(30) Priority: 28.08.2020 GB 202013528
(71) Applicant: Sony Interactive Entertainment Inc., Tokyo 108-0075 (JP)
(72) Inventor: CERRATO, Maurizio, London, W1F 7LP (GB); SANDERS, Matthew, London, W1F 7LP (GB); CONNOR, Patrick, London, W1F 7LP (GB); BREUGELMANS, Mark, London, W1F 7LP (GB); GRANT, Jessica, London, W1F 7LP (GB)
(74) Representative: D Young & Co LLP

(57) **Abstract**

An image rendering instruction generation system comprising an object identification unit operable to identify one or more objects for rendering in a virtual scene, a shader identification unit operable to identify a shader for rendering the identified objects, wherein the shader comprises two or more shading processes corresponding to different levels of detail, a draw call generation unit operable to generate a draw call comprising the identified shader, and a draw call output unit operable to provide the generated draw call to an image rendering system.

## Description

### BACKGROUND OF THE INVENTION

### Field of the invention

This disclosure relates to an image rendering system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Gaze tracking systems are used to identify a location of a subject's gaze within an environment; in many cases, this location may be a position on a display screen that is being viewed by the subject. In a number of existing arrangements, this is performed using one or more inwards-facing cameras directed towards the subject's eye (or eyes) in order to determine a direction in which the eyes are oriented at any given time. Having identified the orientation of the eye, a gaze direction can be determined and a focal region may be determined as the intersection of the gaze direction of each eye.

One application for which gaze tracking is considered of particular use is that of use in head-mountable display units (HMDs). The use in HMDs may be of particular benefit owing to the close proximity of inward-facing cameras to the user's eyes, allowing the tracking to be performed much more accurately and precisely than in arrangements in which it is not possibly to provide the cameras with such proximity.

By utilising gaze detection techniques, it may be possible to provide a more efficient and/or effective processing method for generating content or interacting with devices.

For example, gaze tracking may be used to provide user inputs or to assist with such inputs - a continued gaze at a location may act as a selection, or a gaze towards a particular object accompanied by another input (such as a button press) may be considered as a suitable input. This may be more effective as an input method in some embodiments, particularly in those in which a controller is not provided or when a user has limited mobility.

Foveal rendering is an example of a use for the results of a gaze tracking process in order to improve the efficiency of a content generation process. Foveal rendering is rendering that is performed so as to exploit the fact that human vision is only able to identify high detail in a narrow region (the fovea), with the ability to discern detail tailing off sharply outside of this region.

In such methods, a portion of the display is identified as being an area of focus in accordance with the user's gaze direction. This portion of the display is supplied with high-quality image content, while the remaining areas of the display are provided with lower-quality (and therefore less resource intensive to generate) image content. This can lead to a more efficient use of available processing resources without a noticeable degradation of image quality for the user.

It is therefore considered advantageous to be able to improve gaze tracking methods, and/or apply the results of such methods in an improved manner. It is in the context of such advantages that the present disclosure arises.

### SUMMARY OF THE INVENTION

This disclosure is defined by claim 1.

Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an HMD worn by a user;
Figure 2 is a schematic plan view of an HMD;
Figure 3 schematically illustrates the formation of a virtual image by an HMD;
Figure 4 schematically illustrates another type of display for use in an HMD;
Figure 5 schematically illustrates a pair of stereoscopic images;
Figure 6a schematically illustrates a plan view of an HMD;
Figure 6b schematically illustrates a near-eye tracking arrangement;
Figure 7 schematically illustrates a remote tracking arrangement;
Figure 8 schematically illustrates a gaze tracking environment;
Figure 9 schematically illustrates a gaze tracking system;
Figure 10 schematically illustrates a human eye;
Figure 11 schematically illustrates a graph of human visual acuity;
Figure 12 schematically illustrates a rendering scheme;
Figures 13 and 14 each schematically illustrates a level of detail rendering scheme;
Figure 15 schematically illustrates an object being rendered;
Figure 16 schematically illustrates an image rendering instruction generation system;
Figure 17 schematically illustrates an image rendering system;
Figure 18 schematically illustrates an image rendering instruction generation method; and
Figure 19 schematically illustrates an image rendering method.

### DESCRIPTION OF THE EMBODIMENTS

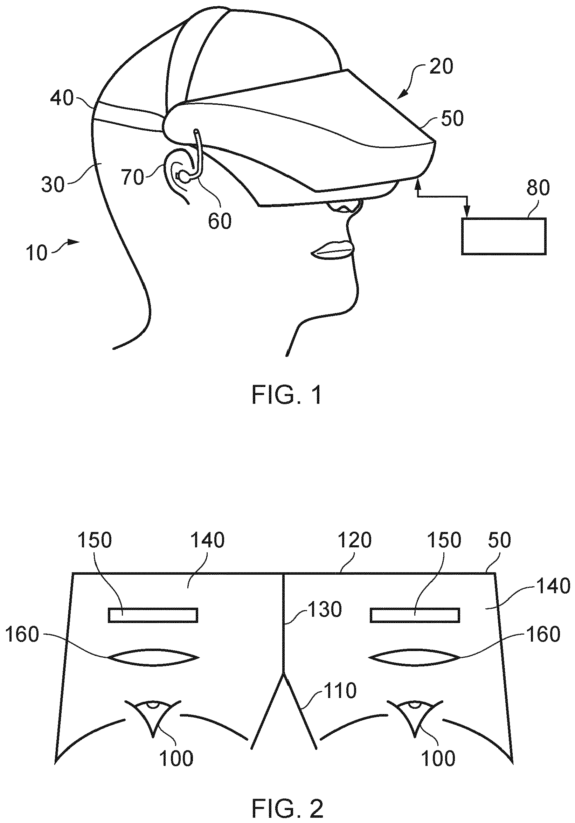

Referring now to the drawings, wherein like reference numerals designate identical or corresponding parts throughout the several views, embodiments of the present disclosure are described. In Figure 1, a user 10 is wearing an HMD 20 (as an example of a generic head-mountable apparatus - other examples including audio headphones or a head-mountable light source) on the user's head 30. The HMD comprises a frame 40, in this example formed of a rear strap and a top strap, and a display portion 50. As noted above, many gaze tracking arrangements may be considered particularly suitable for use in HMD systems; however, use with such an HMD system should not be considered essential.

Note that the HMD of Figure 1 may comprise further features, to be described below in connection with other drawings, but which are not shown in Figure 1 for clarity of this initial explanation.

The HMD of Figure 1 completely (or at least substantially completely) obscures the user's view of the surrounding environment. All that the user can see is the pair of images displayed within the HMD, as supplied by an external processing device such as a games console in many embodiments. Of course, in some embodiments images may instead (or additionally) be generated by a processor or obtained from memory located at the HMD itself.

The HMD has associated headphone audio transducers or earpieces 60 which fit into the user's left and right ears 70. The earpieces 60 replay an audio signal provided from an external source, which may be the same as the video signal source which provides the video signal for display to the user's eyes.

The combination of the fact that the user can see only what is displayed by the HMD and, subject to the limitations of the noise blocking or active cancellation properties of the earpieces and associated electronics, can hear only what is provided via the earpieces, mean that this HMD may be considered as a so-called "full immersion" HMD. Note however that in some embodiments the HMD is not a full immersion HMD, and may provide at least some facility for the user to see and/or hear the user's surroundings. This could be by providing some degree of transparency or partial transparency in the display arrangements, and/or by projecting a view of the outside (captured using a camera, for example a camera mounted on the HMD) via the HMD's displays, and/or by allowing the transmission of ambient sound past the earpieces and/or by providing a microphone to generate an input sound signal (for transmission to the earpieces) dependent upon the ambient sound.

A front-facing camera 122 may capture images to the front of the HMD, in use. Such images may be used for head tracking purposes, in some embodiments, while it may also be suitable for capturing images for an augmented reality (AR) style experience. A Bluetooth^{®} antenna 124 may provide communication facilities or may simply be arranged as a directional antenna to allow a detection of the direction of a nearby Bluetooth transmitter.

In operation, a video signal is provided for display by the HMD. This could be provided by an external video signal source 80 such as a video games machine or data processing apparatus (such as a personal computer), in which case the signals could be transmitted to the HMD by a wired or a wireless connection. Examples of suitable wireless connections include Bluetooth^{®} connections. Audio signals for the earpieces 60 can be carried by the same connection. Similarly, any control signals passed from the HMD to the video (audio) signal source may be carried by the same connection. Furthermore, a power supply (including one or more batteries and/or being connectable to a mains power outlet) may be linked by a cable to the HMD. Note that the power supply and the video signal source 80 may be separate units or may be embodied as the same physical unit. There may be separate cables for power and video (and indeed for audio) signal supply, or these may be combined for carriage on a single cable (for example, using separate conductors, as in a USB cable, or in a similar way to a "power over Ethernet" arrangement in which data is carried as a balanced signal and power as direct current, over the same collection of physical wires). The video and/or audio signal may be carried by, for example, an optical fibre cable. In other embodiments, at least part of the functionality associated with generating image and/or audio signals for presentation to the user may be carried out by circuitry and/or processing forming part of the HMD itself. A power supply may be provided as part of the HMD itself.

Some embodiments of the invention are applicable to an HMD having at least one electrical and/or optical cable linking the HMD to another device, such as a power supply and/or a video (and/or audio) signal source. So, embodiments of the invention can include, for example:
(a) an HMD having its own power supply (as part of the HMD arrangement) but a cabled connection to a video and/or audio signal source;
(b) an HMD having a cabled connection to a power supply and to a video and/or audio signal source, embodied as a single physical cable or more than one physical cable;
(c) an HMD having its own video and/or audio signal source (as part of the HMD arrangement) and a cabled connection to a power supply; or
(d) an HMD having a wireless connection to a video and/or audio signal source and a cabled connection to a power supply.

If one or more cables are used, the physical position at which the cable enters or joins the HMD is not particularly important from a technical point of view. Aesthetically, and to avoid the cable(s) brushing the user's face in operation, it would normally be the case that the cable(s) would enter or join the HMD at the side or back of the HMD (relative to the orientation of the user's head when worn in normal operation). Accordingly, the position of the cables relative to the HMD in Figure 1 should be treated merely as a schematic representation.

Accordingly, the arrangement of Figure 1 provides an example of a head-mountable display system comprising a frame to be mounted onto an observer's head, the frame defining one or two eye display positions which, in use, are positioned in front of a respective eye of the observer and a display element mounted with respect to each of the eye display positions, the display element providing a virtual image of a video display of a video signal from a video signal source to that eye of the observer.

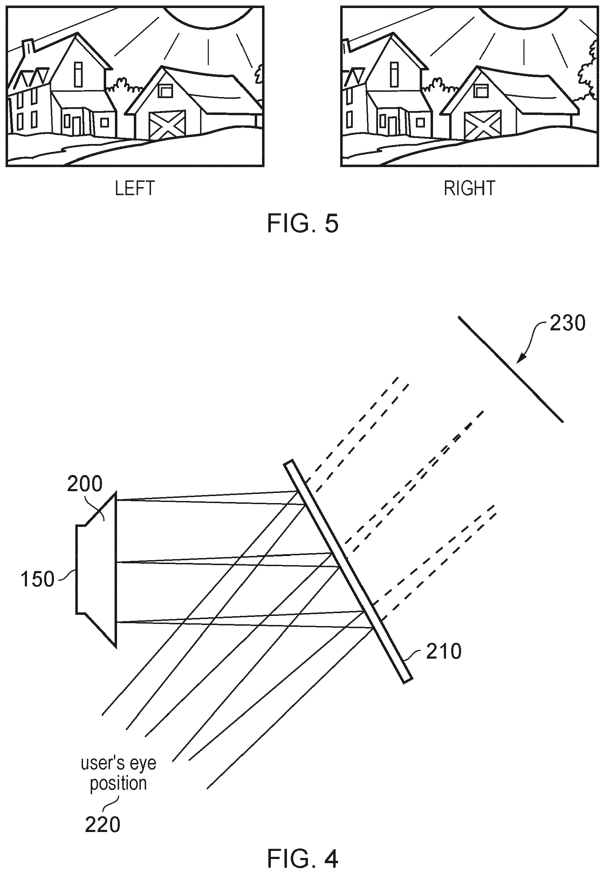

Figure 1 shows just one example of an HMD. Other formats are possible: for example an HMD could use a frame more similar to that associated with conventional eyeglasses, namely a substantially horizontal leg extending back from the display portion to the top rear of the user's ear, possibly curling down behind the ear. In other (not full immersion) examples, the user's view of the external environment may not in fact be entirely obscured; the displayed images could be arranged so as to be superposed (from the user's point of view) over the external environment. An example of such an arrangement will be described below with reference to Figure 4.

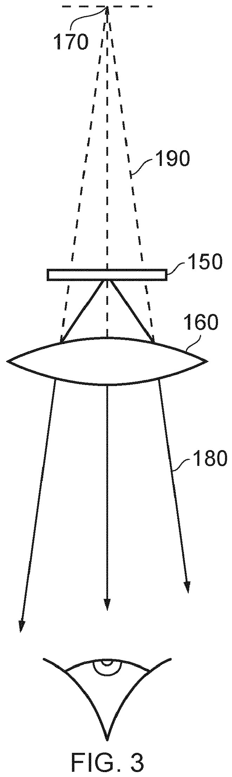

In the example of Figure 1, a separate respective display is provided for each of the user's eyes. A schematic plan view of how this is achieved is provided as Figure 2, which illustrates the positions 100 of the user's eyes and the relative position 110 of the user's nose. The display portion 50, in schematic form, comprises an exterior shield 120 to mask ambient light from the user's eyes and an internal shield 130 which prevents one eye from seeing the display intended for the other eye. The combination of the user's face, the exterior shield 120 and the interior shield 130 form two compartments 140, one for each eye. In each of the compartments there is provided a display element 150 and one or more optical elements 160. The way in which the display element and the optical element(s) cooperate to provide a display to the user will be described with reference to Figure 3.

Referring to Figure 3, the display element 150 generates a displayed image which is (in this example) refracted by the optical elements 160 (shown schematically as a convex lens but which could include compound lenses or other elements) so as to generate a virtual image 170 which appears to the user to be larger than and significantly further away than the real image generated by the display element 150. As an example, the virtual image may have an apparent image size (image diagonal) of more than 1 m and may be disposed at a distance of more than 1 m from the user's eye (or from the frame of the HMD). In general terms, depending on the purpose of the HMD, it is desirable to have the virtual image disposed a significant distance from the user. For example, if the HMD is for viewing movies or the like, it is desirable that the user's eyes are relaxed during such viewing, which requires a distance (to the virtual image) of at least several metres. In Figure 3, solid lines (such as the line 180) are used to denote real optical rays, whereas broken lines (such as the line 190) are used to denote virtual rays.

An alternative arrangement is shown in Figure 4. This arrangement may be used where it is desired that the user's view of the external environment is not entirely obscured. However, it is also applicable to HMDs in which the user's external view is wholly obscured. In the arrangement of Figure 4, the display element 150 and optical elements 200 cooperate to provide an image which is projected onto a mirror 210, which deflects the image towards the user's eye position 220. The user perceives a virtual image to be located at a position 230 which is in front of the user and at a suitable distance from the user.

In the case of an HMD in which the user's view of the external surroundings is entirely obscured, the mirror 210 can be a substantially 100% reflective mirror. The arrangement of Figure 4 then has the advantage that the display element and optical elements can be located closer to the centre of gravity of the user's head and to the side of the user's eyes, which can produce a less bulky HMD for the user to wear. Alternatively, if the HMD is designed not to completely obscure the user's view of the external environment, the mirror 210 can be made partially reflective so that the user sees the external environment, through the mirror 210, with the virtual image superposed over the real external environment.

In the case where separate respective displays are provided for each of the user's eyes, it is possible to display stereoscopic images. An example of a pair of stereoscopic images for display to the left and right eyes is shown in Figure 5. The images exhibit a lateral displacement relative to one another, with the displacement of image features depending upon the (real or simulated) lateral separation of the cameras by which the images were captured, the angular convergence of the cameras and the (real or simulated) distance of each image feature from the camera position.

Note that the lateral displacements in Figure 5 could in fact be the other way round, which is to say that the left eye image as drawn could in fact be the right eye image, and the right eye image as drawn could in fact be the left eye image. This is because some stereoscopic displays tend to shift objects to the right in the right eye image and to the left in the left eye image, so as to simulate the idea that the user is looking through a stereoscopic window onto the scene beyond. However, some HMDs use the arrangement shown in Figure 5 because this gives the impression to the user that the user is viewing the scene through a pair of binoculars. The choice between these two arrangements is at the discretion of the system designer.

In some situations, an HMD may be used simply to view movies and the like. In this case, there is no change required to the apparent viewpoint of the displayed images as the user turns the user's head, for example from side to side. In other uses, however, such as those associated with virtual reality (VR) or augmented reality (AR) systems, the user's viewpoint needs to track movements with respect to a real or virtual space in which the user is located.

As mentioned above, in some uses of the HMD, such as those associated with virtual reality (VR) or augmented reality (AR) systems, the user's viewpoint needs to track movements with respect to a real or virtual space in which the user is located.

This tracking is carried out by detecting motion of the HMD and varying the apparent viewpoint of the displayed images so that the apparent viewpoint tracks the motion. The detection may be performed using any suitable arrangement (or a combination of such arrangements). Examples include the use of hardware motion detectors (such as accelerometers or gyroscopes), external cameras operable to image the HMD, and outwards-facing cameras mounted onto the HMD.

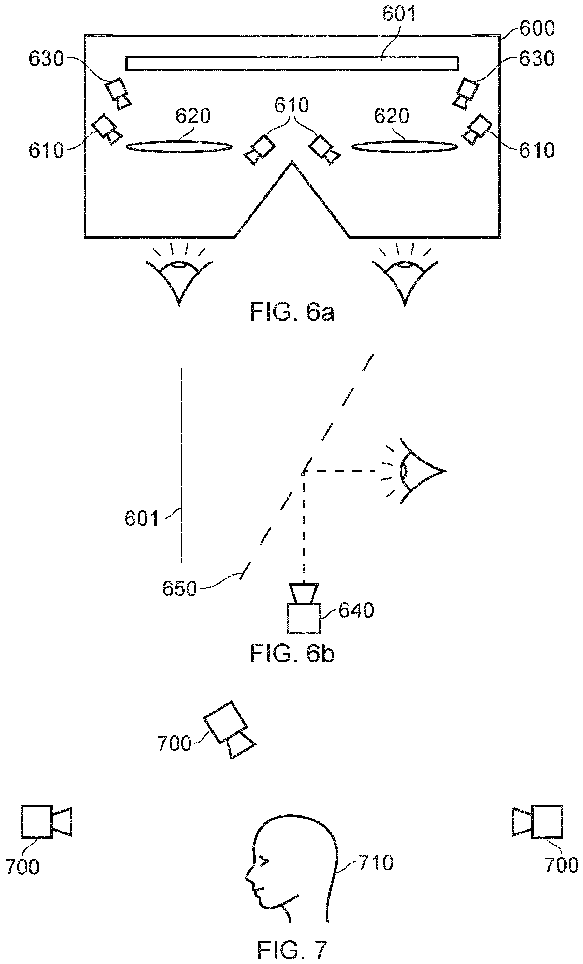

Turning to gaze tracking in such an arrangement, Figure 6 schematically illustrates two possible arrangements for performing eye tracking on an HMD. The cameras provided within such arrangements may be selected freely so as to be able to perform an effective eye-tracking method. In some existing arrangements, visible light cameras are used to capture images of a user's eyes. Alternatively, infra-red (IR) cameras are used so as to reduce interference either in the captured signals or with the user's vision should a corresponding light source be provided, or to improve performance in low-light conditions.

Figure 6a shows an example of a gaze tracking arrangement in which the cameras are arranged within an HMD so as to capture images of the user's eyes from a short distance. This may be referred to as near-eye tracking, or head-mounted tracking.

In this example, an HMD 600 (with a display element 601) is provided with cameras 610 that are each arranged so as to directly capture one or more images of a respective one of the user's eyes using an optical path that does not include the lens 620. This may be advantageous in that distortion in the captured image due to the optical effect of the lens is able to be avoided. Four cameras 610 are shown here as examples of possible positions that eye-tracking cameras may provided, although it should be considered that any number of cameras may be provided in any suitable location so as to be able to image the corresponding eye effectively. For example, only one camera may be provided per eye or more than two cameras may be provided for each eye.

However it is considered that in a number of embodiments it is advantageous that the cameras are instead arranged so as to include the lens 620 in the optical path used to capture images of the eye. Examples of such positions are shown by the cameras 630. While this may result in processing being required to enable suitably accurate tracking to be performed, due to the deformation in the captured image due to the lens, this may be performed relatively simply due to the fixed relative positions of the corresponding cameras and lenses. An advantage of including the lens within the optical path may be that of simplifying the physical constraints upon the design of an HMD, for example.

Figure 6b shows an example of a gaze tracking arrangement in which the cameras are instead arranged so as to indirectly capture images of the user's eyes. Such an arrangement may be particularly suited to use with IR or otherwise non-visible light sources, as will be apparent from the below description.

Figure 6b includes a mirror 650 arranged between a display 601 and the viewer's eye (of course, this can be extended to or duplicated at the user's other eye as appropriate). For the sake of clarity, any additional optics (such as lenses) are omitted in this Figure - it should be appreciated that they may be present at any suitable position within the depicted arrangement. The mirror 650 in such an arrangement is selected so as to be partially transmissive; that is, the mirror 650 should be selected so as to enable the camera 640 to obtain an image of the user's eye while the user views the display 601.

One method of achieving this is to provide a mirror 650 that is reflective to IR wavelengths but transmissive to visible light - this enables IR light used for tracking to be reflected from the user's eye towards the camera 640 while the light emitted by the display 601 passes through the mirror uninterrupted.

Such an arrangement may be advantageous in that the cameras may be more easily arranged out of view of the user, for instance. Further to this, improvements to the accuracy of the eye tracking may be obtained due to the fact that the camera captures images from a position that is effectively (due to the reflection) along the axis between the user's eye and the display.

Of course, eye-tracking arrangements need not be implemented in a head-mounted or otherwise near-eye fashion as has been described above. For example, Figure 7 schematically illustrates a system in which a camera is arranged to capture images of the user from a distance; this distance may vary during tracking, and may take any value in dependence upon the parameters of the tracking system. For example, this distance may be thirty centimetres, a metre, five metres, ten metres, or indeed any value so long as the tracking is not performed using an arrangement that is affixed to the user's head.

In Figure 7, an array of cameras 700 is provided that together provide multiple views of the user 710. These cameras are configured to capture information identifying at least the direction in which a user's 710 eyes are focused, using any suitable method. For example, IR cameras may be utilised to identify reflections from the user's 710 eyes. An array of cameras 700 may be provided so as to provide multiple views of the user's 710 eyes at any given time, or may be provided so as to simply ensure that at any given time at least one camera 700 is able to view the user's 710 eyes. It is apparent that in some use cases it may not be necessary to provide such a high level of coverage and instead only one or two cameras 700 may be used to cover a smaller range of possible viewing directions of the user 710.

Of course, the technical difficulties associated with such a long-distance tracking method may be increased; higher resolution cameras may be required, as may stronger light sources for generating IR light, and further information (such as head orientation of the user) may need to be input to determine a focus of the user's gaze. The specifics of the arrangement may be determined in dependence upon a required level of robustness, accuracy, size, and/or cost, for example, or any other design consideration.

Despite technical challenges including those discussed above, such tracking methods may be considered beneficial in that they allow a greater range of interactions for a user ― rather than being limited to HMD viewing, gaze tracking may be performed for a viewer of a television, for instance.

Rather than varying only in the location in which cameras are provided, eye-tracking arrangements may also differ in where the processing of the captured image data to determine tracking data is performed.

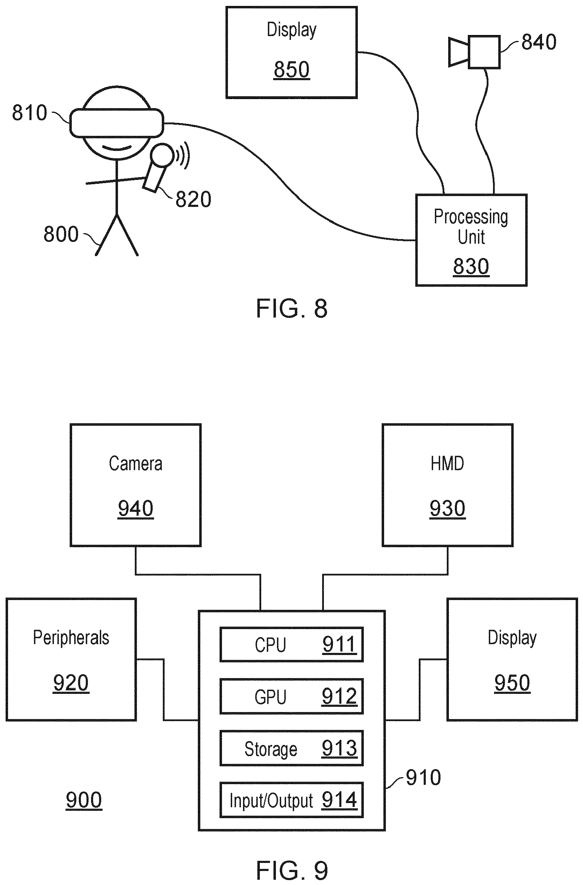

Figure 8 schematically illustrates an environment in which an eye-tracking process may be performed. In this example, the user 800 is using an HMD 810 that is associated with the processing unit 830, such as a games console, with the peripheral 820 allowing a user 800 to input commands to control the processing. The HMD 810 may perform eye tracking in line with an arrangement exemplified by Figure 6a or 6b, for example ― that is, the HMD 810 may comprise one or more cameras operable to capture images of either or both of the user's 800 eyes. The processing unit 830 may be operable to generate content for display at the HMD 810; although some (or all) of the content generation may be performed by processing units within the HMD 810.

The arrangement in Figure 8 also comprises a camera 840, located outside of the HMD 810, and a display 850. In some cases, the camera 840 may be used for performing tracking of the user 800 while using the HMD 810, for example to identify body motion or a head orientation. The camera 840 and display 850 may be provided as well as or instead of the HMD 810; for example these may be used to capture images of a second user and to display images to that user while the first user 800 uses the HMD 810, or the first user 800 may be tracked and view content with these elements instead of the HMD 810. That is to say, the display 850 may be operable to display generated content provided by the processing unit 830 and the camera 840 may be operable to capture images of one or more users' eyes to enable eye-tracking to be performed.

While the connections shown in Figure 8 are shown by lines, this should of course not be taken to mean that the connections should be wired; any suitable connection method, including wireless connections such as wireless networks or Bluetooth^{®}, may be considered suitable. Similarly, while a dedicated processing unit 830 is shown in Figure 8 it is also considered that the processing may in some embodiments be performed in a distributed manner - such as using a combination of two or more of the HMD 810, one or more processing units, remote servers (cloud processing), or games consoles.

The processing required to generate tracking information from captured images of the user's 800 eye or eyes may be performed locally by the HMD 810, or the captured images or results of one or more detections may be transmitted to an external device (such as a the processing unit 830) for processing. In the former case, the HMD 810 may output the results of the processing to an external device for use in an image generation process if such processing is not performed exclusively at the HMD 810. In embodiments in which the HMD 810 is not present, captured images from the camera 840 are output to the processing unit 830 for processing.

Figure 9 schematically illustrates a system for performing one or more eye tracking processes, for example in an embodiment such as that discussed above with reference to Figure 8. The system 900 comprises a processing device 910, one or more peripherals 920, an HMD 930, a camera 940, and a display 950. Of course, not all elements need be present within the system 900 in a number of embodiments ― for instance, if the HMD 930 is present then it is considered that the camera 940 may be omitted as it is unlikely to be able to capture images of the user's eyes.

As shown in Figure 9, the processing device 910 may comprise one or more of a central processing unit (CPU) 911, a graphics processing unit (GPU) 912, storage (such as a hard drive, or any other suitable data storage medium) 913, and an input/output 914. These units may be provided in the form of a personal computer, a games console, or any other suitable processing device.

For example, the CPU 911 may be configured to generate tracking data from one or more input images of the user's eyes from one or more cameras, or from data that is indicative of a user's eye direction. This may be data that is obtained from processing images of the user's eye at a remote device, for example. Of course, should the tracking data be generated elsewhere then such processing would not be necessary at the processing device 910.

The GPU 912 may be configured to generate content for display to the user on which the eye tracking is being performed. In some embodiments, the content itself may be modified in dependence upon the tracking data that is obtained - an example of this is the generation of content in accordance with a foveal rendering technique. Of course, such content generation processes may be performed elsewhere - for example, an HMD 930 may have an on-board GPU that is operable to generate content in dependence upon the eye tracking data.

The storage 913 may be provided so as to store any suitable information. Examples of such information include program data, content generation data, and eye tracking model data. In some cases, such information may be stored remotely such as on a server, and as such a local storage 913 may not be required - the discussion of the storage 913 should therefore be considered to refer to local (and in some cases removable storage media) or remote storage.

The input/output 914 may be configured to perform any suitable communication as appropriate for the processing device 910. Examples of such communication include the transmission of content to the HMD 930 and/or display 950, the reception of eye-tracking data and/or images from the HMD 930 and/or the camera 940, and communication with one or more remote servers (for example, via the internet).

As discussed above, the peripherals 920 may be provided to allow a user to provide inputs to the processing device 910 in order to control processing or otherwise interact with generated content. This may be in the form of button presses or the like, or alternatively via tracked motion to enable gestures to be used as inputs.

The HMD 930 may comprise a number of sub-elements, which have been omitted from Figure 9 for the sake of clarity. Of course, the HMD 930 should comprise a display unit operable to display images to a user. In addition to this, the HMD 930 may comprise any number of suitable cameras for eye tracking (as discussed above), in addition to one or more processing units that are operable to generate content for display and/or generate eye tracking data from the captured images.

The camera 940 and display 950 may be configured in accordance with the discussion of the corresponding elements above with respect to Figure 8.

Turning to the image capture process upon which the eye tracking is based, examples of different cameras are discussed. The first of these is a standard camera, which captures a sequence of images of the eye that may be processed to determine tracking information. The second is that of an event camera, which instead generates outputs in accordance with observed changes in brightness.

It is more common to use standard cameras in such tracking arrangements, given that they are widely available and often relatively cheap to produce. 'Standard cameras' here refer to cameras which capture images of the environment at predetermined intervals which can be combined to generate video content. For example, a typical camera of this type may capture thirty images (frames) each second, and these images may be output to a processing unit for feature detection or the like to be performed so as to enable tracking of the eye.

Such a camera comprises a light-sensitive array that is operable to record light information during an exposure time, with the exposure time being controlled by a shutter speed (the speed of which dictates the frequency of image capture). The shutter may be configured as a rolling shutter (line-by-line reading of the captured information) or a global shutter (reading the captured information of the whole frame simultaneously), for example.

However, in some arrangements it may be considered advantageous to instead use an event camera, which may also be referred to as a dynamic vision sensor. Such cameras do not require a shutter as described above, and instead each element of the light-sensitive array (often referred to as a pixel) is configured to output a signal at any time a threshold brightness change is observed. This means that images are not output in the traditional sense - however an image reconstruction algorithm may be applied that is able to generate an image from the signals output by an event camera.

While there is an increased computational complexity for generating an image from such data, the output of the event camera can be used for tracking without any image generation. One example of how this is performed is that of using an IR-sensitive event camera; when imaged using IR light, the pupil of the human eye displays a much higher level of brightness than the surrounding features. By selecting an appropriate threshold brightness, the motion of the pupil would be expected to trigger events (and corresponding outputs) at the sensor.

Independent of the type of camera that is selected, in many cases it may be advantageous to provide illumination to the eye in order to obtain a suitable image. One example of this is the provision of an IR light source that is configured to emit light in the direction of one or both of the user's eyes; an IR camera may then be provided that is able to detect reflections from the user's eye in order to generate an image. IR light may be preferable as it is invisible to the human eye, and as such does not interfere with normal viewing of content by the user, but it is not considered to be essential. In some cases, the illumination may be provided by a light source that is affixed to the imaging device, while in other embodiments it may instead be that the light source is arranged away from the imaging device.

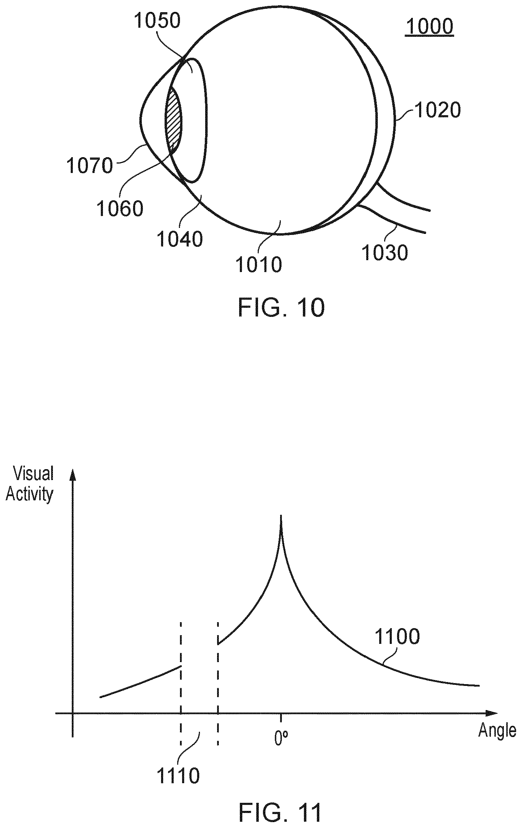

As suggested in the discussion above, the human eye does not have a uniform structure; that is, the eye is not a perfect sphere, and different parts of the eye have different characteristics (such as varying reflectance or colour). Figure 10 shows a simplified side view of the structure of a typical eye 1000; this Figure has omitted features such as the muscles which control eye motion for the sake of clarity.

The eye 1000 is formed of a near-spherical structure filled with an aqueous solution 1010, with a retina 1020 formed on the rear surface of the eye 1000. The optic nerve 1030 is connected at the rear of the eye 1000. Images are formed on the retina 1020 by light entering the eye 1000, and corresponding signals carrying visual information are transmitted from the retina 1020 to the brain via the optic nerve 1030.

Turning to the front surface of the eye 1000, the sclera 1040 (commonly referred to as the white of the eye) surrounds the iris 1050. The iris 1050 controls the size of the pupil 1060, which is an aperture through which light enters the eye 1000. The iris 1050 and pupil 1060 are covered by the cornea 1070, which is a transparent layer which can refract light entering the eye 1000. The eye 1000 also comprises a lens (not shown) that is present behind the iris 1050 that may be controlled to adjust the focus of the light entering the eye 1000.

The structure of the eye is such that there is an area of high visual acuity (the fovea), with a sharp drop off either side of this. This is illustrated by the curve 1100 of Figure 11, with the peak in the centre representing the foveal region. The area 1110 is the 'blind spot'; this is an area in which the eye has no visual acuity as it corresponds to the area where the optic nerve meets the retina. The periphery (that is, the viewing angles furthest from the fovea) is not particularly sensitive colour or detail, and instead is used to detect motion.

As has been discussed above, foveal rendering is a rendering technique that takes advantage of the relatively small size (around 2.5 degrees) of the fovea and the sharp fall-off in acuity outside of that.

The eye undergoes a large amount of motion during viewing, and this motion may be categorised into one of a number of categories.

Saccades, and on a smaller scale micro-saccades, are identified as fast motions in which the eyes rapidly move between different points of focus (often in a jerky fashion). This may be considered as ballistic motion, in that once the movement has been initiated it cannot be altered. Saccades are often not conscious eye motions, and instead are performed reflexively to survey an environment. Saccades may last up to two hundred milliseconds, depending on the distance rotated by the eye, but may be as short as twenty milliseconds. The speed of a saccade is also dependent upon the total rotation angle; typical speeds may be between two hundred and five hundred degrees per second.

'Smooth pursuit' refers to a slower movement type than a saccade. Smooth pursuit is generally associated with a conscious tracking of a point of focus by a viewer, and is performed so as to maintain the position of a target within (or at least substantially within) the foveal region of the viewer's vision. This enables a high-quality view of a target of interest to be maintained in spite of motion. If the target moves too fast, then smooth pursuit may instead require a number of saccades in order to keep up; this is because smooth pursuit has a lower maximum speed, in the region of thirty degrees per second.

The vestibular-ocular reflex is a further example of eye motion. The vestibular-ocular reflex is the motion of the eyes that counteracts head motion; that is, the motion of the eyes relative to the head that enables a person to remain focused on a particular point despite moving their head.

Another type of motion is that of the vergence accommodation reflex. This is the motion that causes the eyes to rotate to converge at a point, and the corresponding adjustment of the lens within the eye to cause that point to come into focus.

Further eye motions that may be observed as a part of a gaze tracking process are those of blinks or winks, in which the eyelid covers the eyes of the user. Such motions may be reflexive or intentional, and can often interfere with eye tracking as they will obscure vision of the eye, and the eye is often not stationary during such a motion.

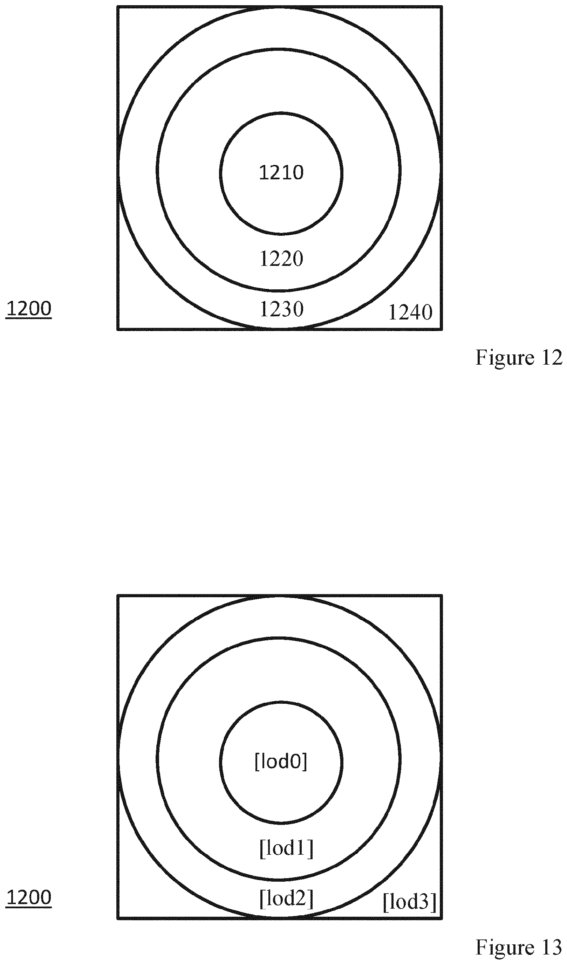

As noted above, foveal rendering techniques are one example of the optimisation of a rendering process that can be performed in dependence upon gaze tracking information. In such techniques, the rendering process is modified so as to provide regions of high resolution nearer to the point of user focus on a display (including the portion of the display falling within the fovea) and regions of lower resolution further from this point of focus (including the portion of the display falling within the user's peripheral vision). An example of such a rendering scheme is shown in Figure 12.

In Figure 12, the display 1200 is divided into several regions of differing resolution based upon the user's focus being directed towards the centre of the screen. The region 1210 has the highest resolution, while the regions 1220, 1230, and 1240 have resolutions of three-quarters, one-half, and one-quarter of this resolution. Of course, the number of regions and the relative resolutions may all be selected freely as appropriate for a given implementation.

In general, such methods are implemented by reducing the number of pixels that the GPU processes in each area outside of the highest-resolution area. This reduces the amount of processing that is performed by the GPU, without varying the complexity of the processing that is performed.

In embodiments of the present disclosure, an approach is taken in which the pixel shader complexity is able to be varied based upon a display location for a pixel. This may be used in conjunction with, or instead of, traditional foveal rendering processes as appropriate. Advantageously, this can reduce the complexity of the processing that is performed by the GPU for at least a subset of the pixels in the generated image and thereby reduce the overall workload on the GPU. This can improve the efficiency of the GPU use, and/or potentially reduce the latency associated with a rendering process.

Such benefits are provided by utilising a modified draw call in the rendering process. Traditional draw calls are regarded as a set of instructions provided by the CPU to the GPU to direct the rendering process. The draw call typically includes mesh data for one or more objects, corresponding texture information, and information identifying a shader to be used to render the object using the mesh and texture. In general, it is considered that the number of draw calls used to render a scene is kept to as low a level as possible so as to reduce the computational burden upon the rendering system. This means that objects sharing a single texture are often rendered using a single draw call, and optimisations are introduced so as to increase the number of objects that are able to share a texture.

In embodiments of the present disclosure, the draw call is modified so as to be able to identify a plurality of shaders that can be used to identify a corresponding object (or plurality of objects for a single draw call). While this increases the size of the draw call, and therefore increases the burden upon a rendering system in this regard, significant gains may be observed in the processing that is performed by the GPU. This is because the plurality of shaders that are specified in the draw call may be selected so as to provide similar visual effects with differing levels of detail.

In such examples, the GPU is configured so as to be able to select from the list of shaders that is provided in dependence upon the location of a pixel (or group of pixels) to be rendered within the display. This dependence may be determined based upon any suitable factors; for example, a measured or predicted gaze direction for a user may be suitable. In such a case, a shader with a higher level of detail is considered more appropriate for areas which are able to be viewed with high visual acuity by a user (such as in the foveal region) while a shader with a lower level of detail is considered more appropriate in other areas (such as in a viewer's periphery).

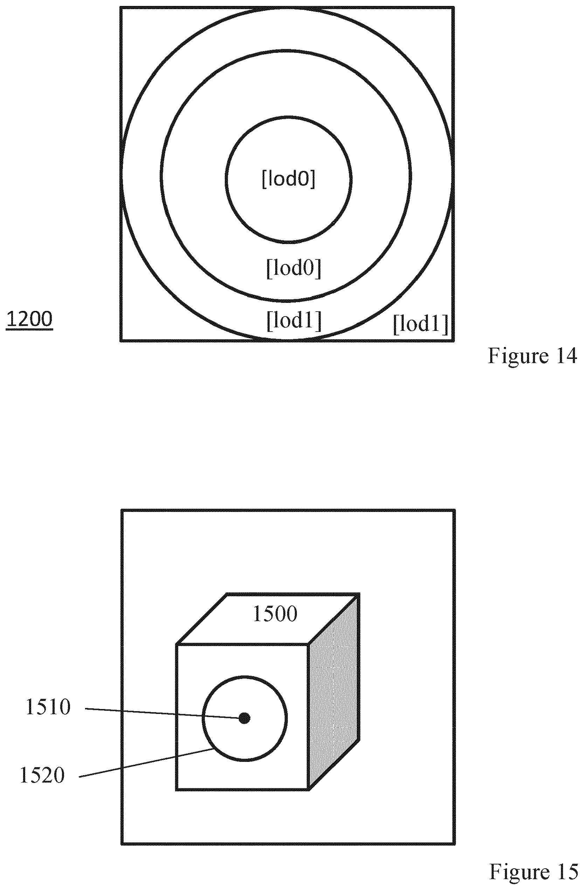

Figures 13 and 14 schematically illustrate exemplary applications of this based upon the example of Figure 12. It should be noted that the areas in Figures 13 and 14 that are referred to as having different resolutions may in some embodiments have the same resolution, and only the shader level of detail is varied (rather than both the shader level of detail and the resolution) between the identified regions.

In Figure 13, each of the regions of different resolution is assigned a unique shader with a level of detail corresponding to the resolution. That is, the central region has the highest resolution and is rendered using the shader with the highest level of detail (LOD[0]). In contrast, the outermost region has the lowest resolution and is rendered using the shader with the lowest level of detail (LOD[3]). The regions between these are each rendered using a level of detail between these two values.

Figure 14 shows an alternative application of the varying shader levels of detail, in that both the innermost regions (corresponding to the highest and second-highest resolutions respectively) are rendered using the shader with the highest level of detail (LOD[0]). The outermost two regions (corresponding to the second-lowest and lowest resolutions respectively) are instead rendered using a second shader with a lower level of detail (LOD[1]).

Of course, each of these examples are entirely illustrative; the provision of different areas of resolution and levels of detail and the correspondence between those may be varied freely as appropriate for a given implementation. Indeed, it is also considered that there need not be any reduction in resolution in some embodiments; instead, the level of detail associated with a shader may be varied throughout the image while using a constant resolution for the entire image.

As noted above, in embodiments of the present disclosure it is considered that multiple shaders are to be provided for performing similar processing but with different levels of detail. In general, it is considered that the number of shaders should be reduced where possible so as to streamline the rendering process. However, the benefits associated with embodiments of the present disclosure justify such a counterintuitive approach.

The different shaders may be implemented in a number of ways. In some examples, each of the shaders may be generated manually by a software developer, while in others it may be considered that an automated process may be applied that generates a number of different shaders having different levels of detail. For example, a method for generating multiple shaders with varying levels of detail may include generating a shader with a highest level of detail, and generating subsequent shaders which each have one or more operations removed so as to vary the level of detail. The order in which operations are removed may be dependent upon a priority value (for example, dependent upon their visual impact upon a rendered image), and the number which are removed may be dependent upon the number of shaders which are to be generated.

While references above have been made to a 'first' and a 'second' shader, or to the user of 'different' shaders, it is considered that in a number of embodiments of the present disclosure a single shader is provided which includes a number of different shading processes that are selectively implemented based upon a level of detail. While this may result in a shader having an increased complexity, this can reduce the overall number of shaders and the frequency with which the shader is changed; as such, a performance increase in the rendering process may be observed in some cases. An example of a single shader reciting multiple processes is provided below.

A pseudocode implementation of a traditional shader which performs a lighting function may be represented as follows:

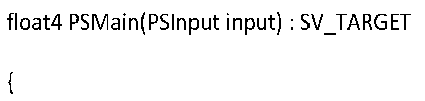

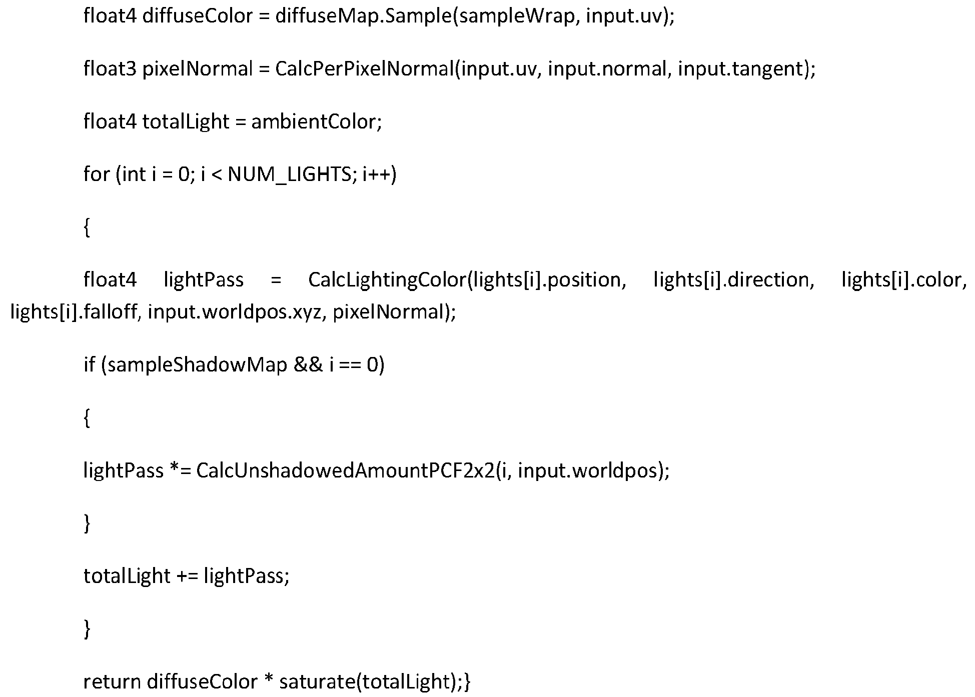

This is therefore a single shader which represents a single processing routine that is to be performed, in which the colour and lighting associated with a pixel is determined. In embodiments of the present disclosure, in which multiple levels of detail are provided for by a shader, an analogous process may instead be implemented in line with the following pseudocode representation:

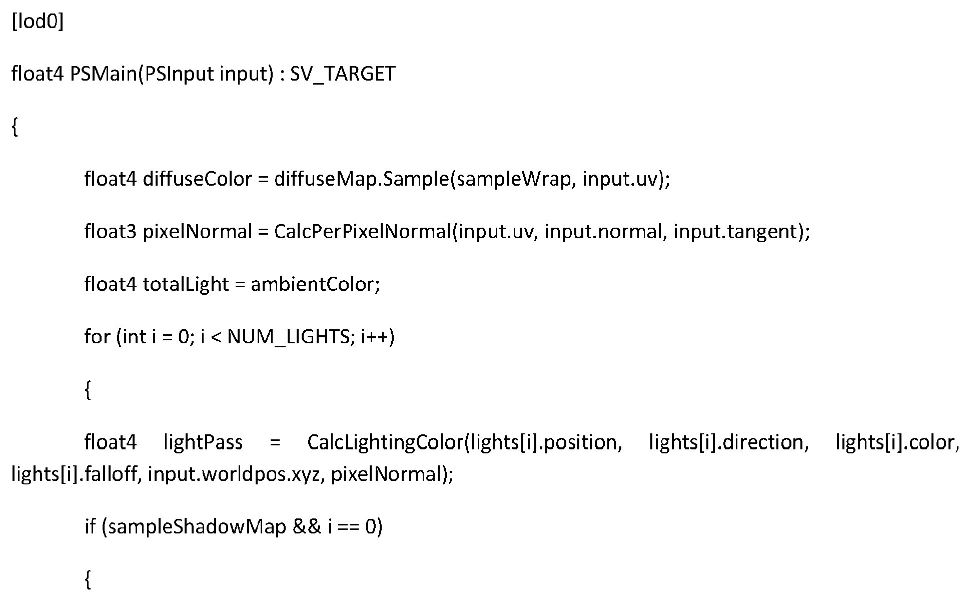

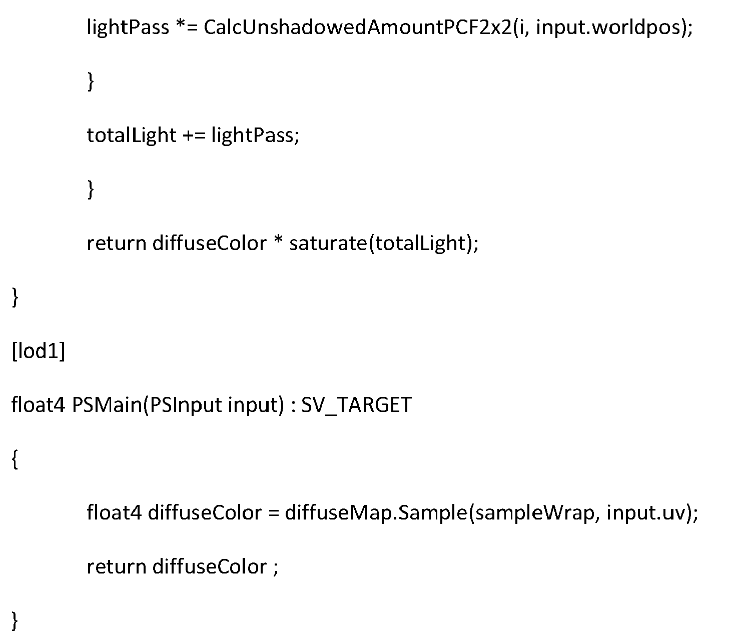

It is clear from the above that this is embodiment utilises a single shader in which two different shading processes are defined, as denoted by the tags [Iod0] and [Iod1]. In Iod0 a full lighting process is performed along with a texture lookup to determine the colour of the pixel, while in lod1 only the texture lookup is performed without any lighting being calculated. The GPU is configured to select between these processes in dependence upon the screen location of the pixel being shaded.

Of course, this is simply an illustrative example; any suitable shading processes may be performed and in any desired configuration, and any desired number of levels of detail may be provided for as appropriate.

Similarly, the specific manner in which the shader is provided may be varied as appropriate. For instance, in some embodiments rather than defining two separate routines which have overlapping processing (such as in the above example, in which Iod0 and Iod1 each have a texture lookup) a number of different processes may be performed that are each tagged with a level of detail. During execution, each of the processes that have a level of detail tag equal to or higher than the specified level of detail may be implemented. In terms of the above example, this would be presented as a texture lookup with the tag [Iod1] and a lighting calculation tagged [Iod0], wherein the selection of [Iod0] causes the processes tagged with both [Iod0] and [Iod1] to be implemented.

In some embodiments, it is considered that a lower-quality shading process is performed rather than a process that omits a function entirely. For example, a reduced-quality lighting calculation may be provided rather than omitting such a calculation entirely. This can be performed by providing a shader that works at a lower resolution (such as performing a single calculation that is used for four adjacent pixels), or otherwise performs a reduced number of processes and/or processes requiring fewer resources. The use of lower-quality shading processes may enable a greater number of levels of detail to be defined for a particular shader, which can aid the flexibility of the system.

As noted above, in some cases these shaders may be generated automatically. For instance, a developer may provide a shader that represents the highest level of detail, and implementations of the same shader are generated by reducing the quality and/or omitting each of one or more processes performed by the shader so as to generate a desired number of implementations having differing levels of detail. This may be performed using information about expected visual impact and required processing resources (either in general use of those processes, or in respect of the specific virtual environment to be rendered), or may be assisted by the developer identifying priority values for each (or at least a subset) of the processes that are included in the shader.

The selection of which level of detail to use for a given shader is to be determined based upon the screen location of an element to which the shading is being applied. The identification of a particular level of detail for a given screen location can be determined in a number of suitable ways, of which some examples are provided below, while the determination of how to divide the screen into elements may also be selected as appropriate for a given implementation.

In some embodiments, gaze tracking according to the above discussion (or variants thereof) may be used to determine which parts of the display are to correspond to each shader level of detail. That is to say that gaze tracking may be used to identify a screen location that is focused upon by a user, and to identify a region corresponding to that location. This region may be determined based upon physiological considerations (such as the size of the fovea) as well as technical (such as the accuracy of the gaze tracking process).

Once identified, this region may be associated with the highest level of detail available within the shader. Alternatively, this may only be the highest level of detail of the shader that is used within the rendering process; it is envisaged that in some cases it may instead be appropriate to limit the maximum level of detail of one or more elements within the rendered image to improve the overall performance of the rendering system.

One or more further regions outside this region, such as those discussed with reference to Figure 14, are then defined and a corresponding shader level of detail to be utilised is assigned to each. This may be a unique level of detail for each region, or a single level of detail may be applied for multiple regions.

As an alternative, or additional, method of determining a mapping between screen location and level of detail for a shader the context of the content that is being rendered may be considered. For example, one or more regions of the screen may be considered higher or lower priority than other regions due to the content that is being displayed in that region. An example of a scenario in which this is advantageous is that of when gaze tracking fails, or is not present in a system, and the context provided by the content being displayed can be indicative of a likely point of focus of the user.

For instance, one or more objects within a scene can be identified as being high priority or of high relevance to the scene, and display areas associated with these can be identified as regions for the use of a shader with a higher level of detail.

The application of a particular level of detail for an element may be applied with any suitable level of granularity. In some embodiments, the determination of a level of detail may be performed on a per-pixel basis. That is to say that the location of each pixel is considered separately to determine which level of detail of the shader to apply. Alternatively, the determination of a level of detail may be performed for a particular surface, primitive, tile, or object within the image to be rendered.

Figure 15 schematically illustrates an example of an object being rendered; in this case, the object being rendered is a cube 1500. The user's point of focus is indicated by the point 1510, with a foveal region 1520 being shown about this point 1510.

In some embodiments, only the pixels within the region 1520 are rendered using the highest level of detail. This is because it is only this region that is identified as being within the foveal region, and therefore the only region in which a user is able to perceive objects with a high level of visual acuity. Regions of the image outside of this area

Alternatively, the whole face of the cube 1500 on which the point 1510 is located may be rendered using the highest level of detail. Such an option may be appropriate in that it can avoid colour discontinuities and the like that could arise from using different shading operations; while the finer detail of the rendering may not be noticeable to the user outside of the foveal region 1520, colour differences may be more easily identified in the non-foveal region.

In some embodiments, the display may be divided into tiles and a group of tiles that includes the entire (or a substantial portion of) region 1520 may be identified to be rendered using the highest level of detail. This high level of detail area may therefore include parts of the screen outside of the region 1520, due to the shape of the tiles, and/or may not cover the entirety of the region 1520.

In some embodiments, it may be considered appropriate to render the entire object 1500 using a high level of detail. While this may reduce the processing efficiency gains offered by the present arrangement, this may offer a more consistent rendering of the scene and as such may be more visually pleasing in a number of cases. As noted above, several objects may be rendered using a single draw call and shader and as such the discussed advantages are still able to be obtained in embodiments such as this.

Of course, it is considered that a mixed approach may be taken in which some determination of a level of detail may be performed in dependence upon one or more factors as appropriate. For example, a per-pixel approach may be taken in general, while complex objects (in which lighting may be more impactful) may be considered using a per-object approach to improve consistency.

A number of additional factors may also be considered when determining an appropriate shader level of detail to apply in each of one or more regions of a display area. One example of such a factor is that of the amount of processing power that is available to a rendering system.

In some instances, it may be considered that an upper limit on the shader level of detail is applied where it is considered that using the maximum level of detail would be too demanding. This may result in fewer levels of detail being utilised in rendering (such that a more uniform level of detail is present in the rendered image), or in the level of detail of each (or at least more than one) region being modified accordingly. For example, in some cases the foveal region may use a level of detail one lower than the maximum with the other regions having an unchanged level of detail. Alternatively, the level of detail used for each of the regions may be reduced by one (where possible). Of course, any other suitable application of a level of detail reduction may be considered appropriate.

Another case which is considered is that of maximising the use of the available processing resources. For instance, the rendering cost for different level of detail distributions across the display area may be determined and a particular distribution may be selected to maximise (or at least increase) the shader level of detail for one or more regions relative to a typical distribution. For example, rather than rendering only the foveal region at a maximum shader level of detail, the surrounding region may also use the maximum level of detail if the rendering system has the capacity to do so. Similarly, the level of detail may be increased for any number of regions where appropriate.

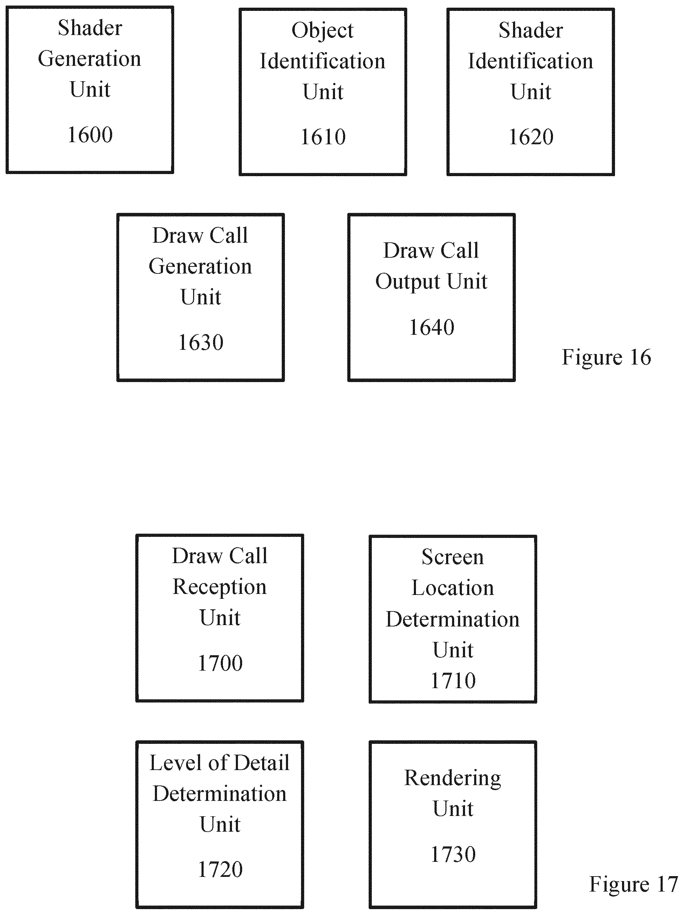

Figure 16 schematically illustrates an image rendering instruction generation system comprising an optional shader generation unit 1600, an objection identification unit 1610, a shader identification unit 1620, a draw call generation unit 1630, and a draw call output unit 1640.

The shader generation unit 1600 is operable to generate a shader comprising one or more shader processes corresponding to lower levels of detail based upon an input shader process. In line with the above discussion, it is considered that a shading process corresponding to a lower level of detail comprises fewer and/or simplified calculations than a shading process corresponding to a higher level of detail for a given object. For instance, in the above example the shading process corresponding to a lower level of detail comprises a simple colour lookup rather than the more complex lighting calculation of the higher level of detail shading process.

The object identification unit 1610 is operable to identify one or more objects for rendering in a virtual scene. For example, this may comprise the generation of a virtual scene based upon game data (or other suitable data for identifying the configuration of a virtual scene or environment) and an identification of the assets (such as objects) that form the scene.

In some embodiments, the identified objects are grouped into a batch that corresponds to a single shader, and in such cases the draw call generation unit 1610 is operable to generate a single draw call representing that batch rather than a single draw call for each object within the batch. Of course, in some cases it is also considered that the batching process generates a plurality of batches, each comprising one or more of the identified objects as appropriate. This plurality of batches may each correspond to a single shader, or may each have a respective individual shader (or any suitable mapping between shaders and batches as appropriate).

The shader identification unit 1620 is operable to identify a shader for rendering the identified objects, wherein the shader comprises two or more shading processes corresponding to different levels of detail. In some embodiments the identified shader is one generated by the shader generation unit 1600, while in others the identified shader may be obtained from another source (such as an external library, or a shader developed by a human operator).

The draw call generation unit 1630 is operable to generate a draw call comprising the identified shader. The draw call should also indicate one or more properties of the object or objects corresponding to the draw call, such as mesh or texture information.

The draw call output unit 1640 is operable to provide the generated draw call to an image rendering system. For example, the draw call unit 1640 may be located at a CPU and output the draw call to a GPU that is configured to perform a rendering process. Of course, other devices or processing units may embody these functions rather than being limited specifically to a paired CPU/GPU; the processing units may be located at different devices in a distributed processing arrangement, for instance.

The arrangement of Figure 16 is an example of a processor (for example, a GPU and/or CPU located in a games console or any other computing device) that is operable to generate image rendering instructions, and in particular is operable to:
identify one or more objects for rendering in a virtual scene;
identify a shader for rendering the identified objects, wherein the shader comprises two or more shading processes corresponding to different levels of detail;
generate a draw call comprising the identified shader; and
provide the generated draw call to an image rendering system.

Figure 17 schematically illustrates an image rendering system for rendering an image using a shader comprising two or more shading processes corresponding to different levels of detail. The image rendering system comprises a draw call reception unit 1700, a screen location determination unit 1710, a level of detail determination unit 1720, and a rendering unit 1730.

The draw call reception unit 1700 is operable to receive a draw call from an image rendering instruction generation system, wherein the draw call identifies one or more objects for rendering using the shader.

The screen location determination unit 1710 is operable to determine the location of each of the one or more objects on a screen used for displaying the rendered images

The level of detail determination unit 1720 is operable to select a level of detail for each of the objects in dependence upon the location of that object on the screen. In some embodiments, the level of detail determination unit 1720 is operable to select a level of detail in dependence upon the location of that object with respect to a detected location of a viewer's gaze on the screen; this can be implemented in a similar fashion to foveal rendering techniques discussed above, for example, such that the selected level of detail is higher for objects that are closer to the detected gaze location. Alternatively, or in addition, the level of detail at each screen location may be determined based upon contextual information about the content as discussed above.

As noted above, the level of detail determination unit 1720 may be operable to select a level of detail on a per-pixel, per-primitive, per-surface, and/or per-object basis for each of the objects as appropriate for a given implementation. That is to say that a selected level of detail may be applied to the single pixel for which it is calculated, the entire primitive including that pixel, the entire surface including that pixel, or the entire object comprising that pixel. Of course, partial implementation may be possible, such that a predetermined number of primitives or pixels or a predetermined amount of a surface or object may be rendered using that level of detail. In cases in which there are multiple potential levels of detail for a particular unit (for example, primitive or surface) of the object due to multiple determinations of a level of detail that do not suggest the same level of detail, it may be the case that an average of the identified levels of detail may be used or the highest identified level of detail may be used.

In some embodiments, the level of detail determination unit 1720 is operable to update the level of detail for a given screen area (or each part of the screen area) with every frame of the rendered content. However, it may instead be appropriate to update the level of detail for each screen location more or less frequently, or even at different intervals if appropriate. That is to say that in some embodiments the level of detail determination unit 1720 is operable to update the level of detail for a given screen area at a predetermined interval.

For example, an update of the mapping between level of detail and screen area may be performed every n frames, where n is an integer equal to or greater than one. Similarly, a specific time period may be set such that the mapping is updated every n milliseconds, where n may take any appropriate value (although this should usually be a longer time than the time it takes to render an image for display). In some cases, the refresh rate may be dependent upon the content (such that the mapping is updated less frequently for more static content, for example) or the user (such that the mapping is updated less frequently for a user who moves their head more than their eyes to track movement, for example). The rate of updating could also be updated in dependence upon observed user eye motion speed or other physical factors where appropriate.

The level of detail may be updated at different rates for different parts of the screen in some embodiments. For instance, in a gaze-dependent implementation, those regions closest to the foveal region of the user may be updated most frequently while those further away may be updated least frequently. This may be appropriate in that those regions where the user is actively looking are likely to be varied more frequently as objects move in/out of the foveal region - whereas those objects in the periphery are unlikely to enter the foveal region or change level of detail with a high frequency due to this being far-removed from the foveal region (and the fact that content often does not make extensive use of the peripheral regions of the screen in view of limitations on human vision).

The rendering unit 1730 is operable to render each of the one or more objects using a shading process corresponding to the respective level of detail. In some embodiments, the rendering unit 1730 is operable to render an image using a lower resolution for objects corresponding to a lower selected level of detail in addition to using a shading process with a lower level of detail. Once rendered, the image may be displayed on any suitable device, or stored for future reproduction where appropriate.

The arrangement of Figure 17 is an example of a processor (for example, a GPU and/or CPU located in a games console or any other computing device) that is operable to perform an image rendering process for rendering an image using a shader comprising two or more shading processes corresponding to different levels of detail, and in particular is operable to:
receive a draw call from an image rendering instruction generation system, wherein the draw call identifies one or more objects for rendering using the shader;
determine the location of each of the one or more objects on a screen used for displaying the rendered images;
select a level of detail for each of the objects in dependence upon the location of that object on the screen; and
render each of the one or more objects using a shading process corresponding to the respective level of detail.

In some embodiments, an image generation system comprising an image rendering instruction generation system according to Figure 16 and an image rendering system according to Figure 17 may be provided. This system may be embodied in a suitable computing device, such as a personal computer, games console, or mobile device, or may be provided in a distributed hardware arrangement. For example, the instructions may be generated using a cloud processing system while the rendering is performed locally (or indeed, all processing may be performed remotely). In some embodiments, this system is provided in conjunction with a display such as a television or a head-mountable display device operable to display the rendered content.

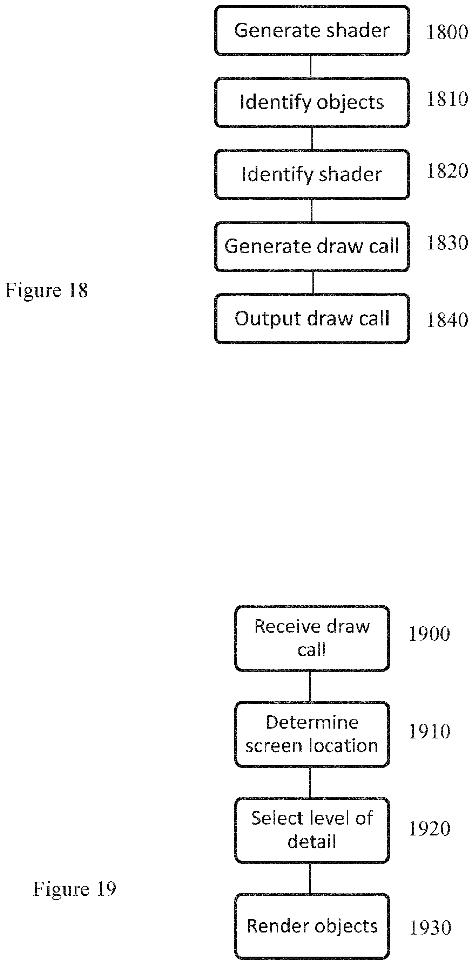

Figure 18 schematically illustrates an image rendering instruction generation method.

An optional step 1800 comprises generating a shader comprising one or more shader processes corresponding to lower levels of detail based upon an input shader process. In some embodiments, this step may instead be performed by generating a shader manually, or obtaining it from another source, rather than generating it using an automated process based upon an input shader.

A step 1810 comprises identifying one or more objects for rendering in a virtual scene.

A step 1820 comprises identifying a shader for rendering the identified objects, wherein the shader comprises two or more shading processes corresponding to different levels of detail.

A step 1830 comprises generating a draw call comprising the identified shader.

A step 1840 comprises providing the generated draw call to an image rendering system.

Figure 19 schematically illustrates an image rendering method for rendering an image using a shader comprising two or more shading processes corresponding to different levels of detail.

A step 1900 comprises receiving a draw call from an image rendering instruction generation system, wherein the draw call identifies one or more objects for rendering using the shader.

A step 1910 comprises determining the location of each of the one or more objects on a screen used for displaying the rendered images.

A step 1920 comprises selecting a respective level of detail for each of the objects in dependence upon the location of that object on the screen.

A step 1930 comprises rendering each of the one or more objects using a shading process corresponding to the respective level of detail.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An image rendering instruction generation system comprising:
an object identification unit operable to identify one or more objects for rendering in a virtual scene;
a shader identification unit operable to identify a shader for rendering the identified objects, wherein the shader comprises two or more shading processes corresponding to different levels of detail;
a draw call generation unit operable to generate a draw call comprising the identified shader; and
a draw call output unit operable to provide the generated draw call to an image rendering system, wherein the image rendering system is operable to render each of the one or more objects using a shading process corresponding to the level of detail selected for each of the one or more objects in dependence upon the screen location of each of the one or more objects.

2. A system according to claim 1, comprising a shader generation unit operable to generate a shader comprising one or more shader processes corresponding to lower levels of detail based upon an input shader process.

3. A system according to claim 1 or claim 2, wherein the identified objects are grouped into a batch that corresponds to a single shader, and
wherein the draw call generation unit is operable to generate a single draw call representing that batch.

4. A system according to any preceding claim, wherein a shading process corresponding to a lower level of detail comprises fewer and/or simplified calculations than a shading process corresponding to a higher level of detail for a given object.

5. An image rendering system for rendering an image using a shader comprising two or more shading processes corresponding to different levels of detail, the system comprising:
a draw call reception unit operable to receive a draw call from an image rendering instruction generation system, wherein the draw call identifies one or more objects for rendering using the shader;
a screen location determination unit operable to determine the location of each of the one or more objects on a screen used for displaying the rendered images;
a level of detail determination unit operable to select a level of detail for each of the objects in dependence upon the location of that object on the screen; and
a rendering unit operable to render each of the one or more objects using a shading process corresponding to the respective level of detail.

6. A system according to claim 5, wherein the level of detail determination unit is operable to select a level of detail in dependence upon the location of that object with respect to a detected location of a viewer's gaze on the screen.

7. A system according to claim 6, wherein the selected level of detail is higher for objects that are closer to the detected gaze location.

8. A system according to any one of claims 5-7, wherein the rendering unit is operable to render an image using a lower resolution for objects corresponding to a lower selected level of detail.

9. A system according to any one of claims 5-8, wherein the level of detail determination unit is operable to select a level of detail on a per-pixel, per-primitive, per-surface, and/or per-object basis for each of the objects.

10. A system according to any one of claims 5-9, wherein the level of detail determination unit is operable to update the level of detail for a given screen area at a predetermined interval.

11. An image generation system comprising:
an image rendering instruction generation system according to any of claims 1-4; and
an image rendering system according to any of claims 5-10.

12. An image rendering instruction generation method comprising:
identifying one or more objects for rendering in a virtual scene;
identifying a shader for rendering the identified objects, wherein the shader comprises two or more shading processes corresponding to different levels of detail;
generating a draw call comprising the identified shader; and
providing the generated draw call to an image rendering system, wherein the image rendering system is operable to render each of the one or more objects using a shading process corresponding to the level of detail selected for each of the one or more objects in dependence upon the screen location of each of the one or more objects.

13. An image rendering method for rendering an image using a shader comprising two or more shading processes corresponding to different levels of detail, the method comprising:
receiving a draw call from an image rendering instruction generation system, wherein the draw call identifies one or more objects for rendering using the shader;
determining the location of each of the one or more objects on a screen used for displaying the rendered images;
selecting a respective level of detail for each of the objects in dependence upon the location of that object on the screen; and
rendering each of the one or more objects using a shading process corresponding to the respective level of detail.

14. Computer software which, when executed by a computer, causes the computer to carry out the method of either of claims 12 or 13.

15. A non-transitory machine-readable storage medium which stores computer software according to claim 14.
